# EUROPÄISCHE PATENTSCHRIFT

(11) **EP 1 147 803 B1**
(45) Veröffentlichungstag und Bekanntmachung des Hinweises auf die Patenterteilung: **02.11.2005**
(21) Anmeldenummer: 00108634.7
(22) Anmeldetag: 20.04.2000
(51) Int. Cl.: B01D 63/08, C02F 3/12

(54) **Vorrichtung zum Filtern und Trennen von insbesondere biologisch organischen Strömungsmedien**
Filtration and separation apparatus, especially for biological-organic fluids
Appareil de filtration et de séparation de fluides, notamment de fluides biologiques-organiques

(43) Veröffentlichungstag der Anmeldung: 24.10.2001
(73) Patentinhaber: Rochem Ultrafiltrations Systeme Gesellschaft für Abwasserreinigung mbH, 21107 Hamburg (DE)
(72) Erfinder: Heine, Wilhelm, 21077 Hamburg (DE); Günther, Ralph Dr., 21244 Buchzholz (DE)
(74) Vertreter: Niedmers, Ole

(56) Entgegenhaltungen:
- EP-A- 0 606 154
- EP-A- 0 707 884
- WO-A-93/24210
- US-A- 5 035 799
- PATENT ABSTRACTS OF JAPAN vol. 1995, no. 04, 31. Mai 1995 (1995-05-31) & JP 07 016591 A (NITTO DENKO CORP), 20. Januar 1995 (1995-01-20)

## Beschreibung

Die Erfindung betrifft eine in einen Klärbehälter, ein freies Gewässer oder einen Bioreaktor eintauchbare Vorrichtung zum Filtern und Trennen von insbesondere biologisch organischen Strömungsmedien durch Umkehrosmose, Mikro-, Ultra- oder Nanofiltration, umfassend eine Mehrzahl voneinander beabstandeter flächiger Filterelemente, die vom Strömungsmedium umflossen werden.

Filtrationsvorrichtungen zum Einsatz in Tauchbetrieb sind z.B. aus der EP-A-0 606 154 bekannt. Die plattenförmigen Filterelemente sind hier senkrecht und parallel angeordnet. Im einzelnen ist die bekannte Vorrichtung auf das Ausfiltern von Schlamm und die Verdickung des gefilterten Schlamms gerichtet, wobei der Schlamm in Wasser suspendiert ist.

Eine Vorrichtung zur Querstromfiltration mit Membranstapeln ist aus der EP-A-0 707 884 bekannt. Die bekannte Vorrichtung weist ein Gehäuse auf, in dem die Stapel von Filterelementen hintereinander angeordnet sind, wobei das Gehäuse einen Einlaß für das zu trennende Medium, einen Auslaß für das Retentat und einen Auslaß für das Permeat aufweist, das von den Filterelementen geeignet abgeführt, gesammelt und über den Permeatauslaß zur weiteren Verwendung nach außen abgeführt wird. Innerhalb des Gehäuses, in dem die Stapel angeordnet sind, wird quasi ein offener Kanal für das Strömungsmedium geschaffen, wobei durch die Art der Anordnung der Stapel aus Filterelementen extrem hohe Strömungsgeschwindigkeiten des Strömungsmediums zwischen dem Einlaß des Strömungsmediums und dem Auslaß des die Vorrichtung als Retentat verlassenden Strömungsmediums möglich sind und somit die Bildung von Ablagerungen beispielsweise in Form eines Filterkuchens auf den Filterelementen ausgeschlossen ist, da die Stapel von Filterelementen faktisch für das längskanalartig fließende Strömungsmedium keine Totzonen aufweisen und das Strömungsmedium quasi umlenkungsfrei vom Einlaß zum Auslaß der Vorrichtung strömen kann.

Sowohl kommunale als auch gewerbliche Abwässer enthalten vielfach einen hohen biologisch organischen Anteil, man spricht vielfach von einer hohen Biomassenkonzentration, die dann nur mit sehr großem apparativen und/oder verfahrensmäßigem Aufwand beherrschbar ist, wenn aus derart biologisch organisch belasteten Strömungsmedien das flüssige Lösungsmittel, in der Regel Wasser, gewonnen werden soll. Die Gewinnung des wässrigen Lösungsmittels kann sowohl dem Zwecke der Aufkonzentrierung des Strömungsmediums dienen, um dieses optimal abbauen zu können, und/oder der Gewinnung des wässrigen Mediums aus dem Strömungsmedium, um beispielsweise Brauch- und sogar element (122) aus Kunststoff und/oder einem metallischen Werkstoff und/oder einem keramischen Werkstoff besteht.

9. Vorrichtung nach einem oder mehreren der Ansprüche 1 bis 8, dadurch gekennzeichnet, daß der Ablaufbolzen (15) eine Mehrzahl von um einen Umfang herum und über seine Länge verteilt angeordnete Durchbrüche (150) zum Eintritt des Permeats (14) in eine den Ablaufbolzen (15) im wesentlichen axial durchquerende Ablaufbohrung (151) aufweist.

10. Vorrichtung nach einem oder mehreren der Ansprüche 1 bis 9, dadurch gekennzeichnet, daß die Filterelemente (12) des Stapels (13) untereinander derart voneinander beabstandet sind, daß sich die Filterelemente (12) während des Betriebes nicht berühren.

11. Vorrichtung nach Anspruch 10, dadurch gekennzeichnet, daß zur Beabstandung der Filterelemente (12) untereinander ringförmige Abstandselemente (17) vorgesehen sind.

12. Vorrichtung nach Anspruch 10, dadurch gekennzeichnet, daß zur Beabstandung der Filterelemente (12) untereinander streifenförmige Abstandselemente 18 vorgesehen sind.

13. Vorrichtung nach einem oder beiden der Ansprüche 11 oder 12, dadurch gekennzeichnet, daß die Abstandselemente (17, 18) dichtende Wirkung gegenüber einem Permeatabflußraum haben.

14. Vorrichtung nach einem oder mehreren der Ansprüche 1 bis 13, dadurch gekennzeichnet, daß die Stapel (13) von mungsmediums bis hin zum Stillstand desselben auszukommen und dabei Ablagerungen in Form eines Filterkuchens auf den Filterelementen weitgehend zu vermeiden, wobei die Vorrichtung effizient und kontinuierlich mit sehr niedrigem Energieaufwand weitgehend wartungsfrei betrieben können werden soll und dennoch eine geringe Energieaufnahme aufweisen soll.

Die Aufgabe gemäß der Erfindung wird durch eine in einen Klärbehälter, ein freies Gewässer oder einen Bioreaktor eintauchbare Vorrichtung zum Filtern und Trennen von insbesondere biologisch organischen Strömungsmedien durch Umkehrosmose sowie Mikro-, Ultra- und.Nanofiltration gelöst, umfassend eine Mehrzahl voneinander beabstandeter flächiger Filterelemente, die vom Strömungsmedium umflossen werden, derart, daß eine Mehrzahl von gesonderten Stapeln von Filterelementen hinter- und/oder nebeneinander angeordnet ist, wobei die Stapel hinter- und/oder nebeneinander vom Strömungsmedium umflossen werden und wobei das von den Filterelementen gesammelte Permeat in die Stapel von Filterelementen durchquerende Ablaufbolzen eingeführt und über Permeatabläufe abgeführt wird, und daß das Permeat im wesentlichen durch Aufbau eines Unterdrucks durch eine Vakuumpumpe am Permeatablauf gegenüber dem im wesentlichen auf dem Niveau des Umgebungs- bzw. Atmosphärendrucks befindlichen Strömungsmedium erzeugbar ist.

Der Vorteil der erfindungsgemäßen Lösung besteht im wesentlichen darin, daß die gesamte Vorrichtung, die grundsätzlich kein die Vorrichtung umgebendes Gehäuse benötigt, in das Strömungsmedium, beispielsweise einen Klärbehälter, ein freies Gewässer oder auch einen Bioreaktor einfach hineingetaucht zu werden braucht und am Permeatablauf der Vorrichtung lediglich ein geeigneter Unterdruck, beispielsweise durch eine Vakuumpumpe, die beispielsweise ein Vakuum von 0,5 bis 0,9 bar erzeugt, appliziert zu werden braucht. Der sehr große Vorteil der erfindungsgemäßen Vorrichtung besteht nicht nur darin, daß quasi kein Gehäuse erforderlich ist und die Vorrichtung an jeder beliebigen geeigneten Stelle in das Strömungsmedium eingetaucht zu werden braucht, sondern auch darin, daß die Trennung des Strömungsmediums im wesentlichen ausschließlich durch den permeatseitigen Unterdruck bewirkt wird, und zwar durch Einstellung der optimalen Druckdifferenz zwischen dem Strömungsmedium und dem Permeat bzw. durch Einstellung eines geeigneten Druckverhältnisses zwischen Strömungsmedium und Permeat. Zudem gestattet die Vorrichtung vorteilhafterweise auch die Ausbildung extrem großer Membranflächen auf kleinstem Raum, wobei auf gehäuseseitige Vorgaben keine Rücksicht genommen zu werden braucht. Reicht die Membranfläche der Vorrichtung nicht aus, um den Aufkonzentrationsgrad des die Vorrichtung verlassenden Retetants, der gewünscht wird, zu erreichen, was gleichermaßen auch für den gewünschten Reinheitsgrad des die Vorrichtung verlassenden Permeats gilt, kann die Vorrichtung auf einfache Weise in ihrer Membranfläche vergrößert werden, indem weitere Stapel von Filterelementen der Vorrichtung zugeordnet werden, die derart konstruktiv ausgestaltet ist, daß dieses auch nachträglich auf einfache Weise möglich ist. Somit stellt die Vorrichtung eine Alternative zu bekannten eintauschbaren Filtervorrichtungen dar.

Gemäß einer vorteilhaften Ausgestaltung der Vorrichtung sind die Filterelemente nach Art von Membrankissen ausgebildet, wie sie in der Membrantrenntechnik allgemein bekannt sind. Es sei allerdings darauf hingewiesen, daß die Filterelemente in Form von Membrankissen nicht die einzige Möglichkeit darstellen, die Filterelemente auszubilden. Es besteht durchaus die Möglichkeit, Filterelemente zu verwenden, die nur aus einer Membranschicht bestehen, wenn durch konstruktive Maßnahmen sichergestellt ist, daß die vom Strömungsmedium abgewandte Seite des Membranelements, d.h. die Permeatseite, gegenüber dem Strömungsmedium effektiv abgedichtet ist, so daß sichergestellt ist, daß das Strömungsmedium sich nicht wieder mit dem Permeat vermischen kann.

Vorteilhafterweise ist in den Membrankissen zwischen den diese jeweils begrenzenden äußeren Membranelementen bzw. dem ein Filterelement einseitig begrenzendem äußeren Membranelement jeweils wenigstens ein flächiges, formstabiles Stabilisierungselement zur Schaffung einer hohen Eigenstabilität des Membrankissens angeordnet. Grundsätzlich ist es natürlich möglich, die Filterelemente, ob nun in Form einelementiger Membranelemente oder in Form von Membrankissen, durch äußere Maßnahmen so zu stabilisieren, daß sie während des Betriebes der Vorrichtung nicht aneinander gedrückt werden bzw. sich nicht auch nur partiell berühren. Diese Maßnahmen nicht vorzusehe, hätte zur Folge, daß die Membranfläche eingeschränkt und somit die Trennleistung vermindert würde. Des weiteren kann es zu Beschädigungen der selektiven Trennschicht der Membranelemente bei einer Berührung kommen und zusätzlich kann eine Berührung auch zum Aneinanderhaften der Membranelemente führen, wodurch wiederum Ablagerungsausgangspunkte geschaffen werden können, die zu einem vollständigen Verblocken der Filterelemente führen können. Auch sind durchaus grobe Inhaltsstoffe bei stark verunreinigten Strömungsmedien anzutreffen, die bei mechanisch instabilen Filterelementen dazu führen können, daß sich die Filterelemente während des Betriebes berühren, mit den vorbeschriebenen nachteiligen Folgen. Aus diesem Grunde ist es vorteilhaft, in die Membrankissen zwischen den diese jeweils begrenzenden äußeren Membranelementen oder, falls nur einseitige Membranelemente verwendet werden, über oder unter dem Membranelement bei solchen nur in Form eines Membranelements ausgebildeten Filterelementen jeweils wenigstens ein flächiges, formstabiles Stabilisierungselement zur Schaffung einer hohen Eigenstabilität des Filterelements anzuordnen. Eine derartige Ausgestaltung der Vorrichtung ist vorteilhafterweise frei von äußeren Abstandselementen, wie sie auch im Stand der Technik bekannt sind, wobei diese von Abstandselementen freie Ausbildung der Filterelemente den sehr großen Vorteil hat, daß das Strömungsmedium ungestört an alle Seiten des Filterelementes gelangen kann, was insbesondere für stillstehende oder nur gering bewegte Strömungsmedien von außerordentlich großem Vorteil ist.

Die Filterelemente selbst bestehen vorteilhafterweise aus einem Polymer oder einem Polymergemisch, wobei in diesem Falle von sogenannten Polymermembranen gesprochen wird. Polymermembrane sind im Stand der Technik für die verschiedensten Trennaufgaben mit den verschiedensten chemischen Zusammensetzungen bekannt und werden für die zu bewältigenden Trennaufgaben geeignet ausgewählt.

Neben den Filterelementen aus Polymer oder Polymergemischen können auch Filterelemente aus keramischen Werkstoffen vorgesehen sein, die imstande sind, spezielle Trennaufgaben zu lösen, die mit Polymermembranen nur schwer, bisweilen gar nicht, zu lösen sind, insbesondere auch dann, wenn das Strömungsmedium Temperaturen aufweist, bei denen Polymer- bzw. Polymergemischmembranen nicht mehr stabil sind.

Das Stabilisierungselement selbst besteht vorteilhafterweise aus einem solchen Werkstoff, der hinreichend temperatur- und druckstabil ist, so daß sich das Filterelement, dem das Stabilisierungselement innen oder außen zugeordnet ist, nicht bzw. nur geringfügig verformt.

Um den Abfluß des Permeats zu verbessern, d.h. auch permeatseitig den Energieaufwand zu vermindern, ist es vorteilhaft, das Stabilisierungselement aus porösem Werkstoff auszubilden. So kann das Permeat ggf. unter noch geringerem Energieaufwand zu den Permeatabflüssen der Vorrichtung gelangen, da durch die poröse Ausbildung des Werkstoffs ein besseres Abfließen des Permeats von der Permeatseite der Membran möglich ist.

Grundsätzlich besteht das Stabilisierungselement vorteilhafterweise aus Kunststoff und/oder einem metallischen Werkstoff und/oder einem keramischen Werkstoff, wobei auch Kombinationen der vorgenannten Werkstoffe zur Ausbildung des Stabilisierungselements möglich sind. Der Werkstoff des Stabilisierungselementes wird auch nach Verträglichkeitskriterien mit dem Strömungsmedium und den zu erwartenden Temperaturbedingungen ausgewählt werden.

Eingangs ist darauf hingewiesen worden, daß die Vorrichtung auch unter dem Gesichtspunkt der Einfachheit und damit des kostengünstig Realisierbarem konzipiert werden soll, was auch Vorteile bezüglich eines massenhaft möglichen Einsatzes einerseits und der Herstellbarkeit und Wartungsfreundlichkeit andererseits hat. Um diesem Gesichtspunkten noch größere Aufmerksamkeit zu widmen, ist es vorteilhaft, den Ablaufbolzen derart auszubilden, daß dieser eine Mehrzahl von um einen Umfang herum und über seine Länge verteilt angeordnete Durchbrüche zum Eintritt des Permeats in eine den Ablaufbolzen im wesentlichen axial durchquerende Ablaufbohrung aufweist. Diese Ausgestaltung ermöglicht es, standardmäßige Rohrhalbzeuge, wie sie im Handel verfügbar sind, für die Ausbildung des Ablaufbolzens zu verwenden, beispielsweise aus Kunststoff oder glasfaserverstärktem Kunststoff oder aus metallischen rohrförmigen Werkstoffen. Auf diese Weise können auch einfache Ablaufrinnen in axialer Richtung im Ablaufbolzen ausgebildet werden und diese Rinnen in bestimmten Abständen zum Rohrinnenraum durchbrochen werden, so daß einerseits die mechanische Stabilität des Ablaufbolzens gewahrt bleibt und andererseits dennoch für eine um den Querschnitt des Ablaufbolzens herum vorgesehene gleichmäßig verteilte Permeatabflußmöglichkeit gesorgt wird.

Die axial ausgebildeten bzw. ausgerichteten Rillen und Durchbrüche können beispielsweise mittels eines Scheibenfräsers mit kleinem Scheibendurchmesser auf verhältnismäßig einfache Weise ausgebildet werden.

Vorteilhafterweise sind die Filterelemente des Stapels untereinander derart voneinander beabstandet, daß sich die Filterelemente während des Betriebes der Vorrichtung nicht berühren, wobei auf die Nachteile des Berührens oben schon hingewiesen worden war.

Vorteilhafterweise kann die Beabstandung der Filterelemente untereinander derart erfolgen, daß ringförmige Abstandselemente vorgesehen sind. Eine derartige Ausgestaltung wird vorzugsweise dann gewählt, wenn die Filterelemente bzw. die Filterelementestapel lediglich von einem einzigen Ablaufbolzen durchquert werden, es ist aber auch grundsätzlich möglich, ringförmige Abstandselemente vorzusehen, wenn beispielsweise zwei Ablaufbolzen einen Stapel von Filterelemente durchqueren. Dennoch wird im letzteren Fall vorteilhafterweise eine Beabstandung der Filterelemente untereinander derart vorgesehen sein, daß dafür streifenförmige Abstandselemente verwendet werden, die im Abstand der Bohrungen für die in diesem Falle voneinander beabstandeten zwei Ablaufbolzen jeweils ein Loch aufweisen, durch das jeweils ein Ablaufbolzen hindurchgeht.

Die Abstandselemente, ob nun ringförmig und/oder streifenförmig, können auch derart ausgebildet sein, daß sie neben ihrer Beabstandungswirkung auch dichtende Wirkung gegenüber einem Permeatabflußraum haben, so daß die Teilevielfalt zur Ausbildung eines Stapels aus Filterelementen gesenkt werden kann.

Die Stapel von Filterelementen selbst können vorzugsweise von beidseitig die Stapel begrenzenden und beabstandeten Streben zusammengehalten werden, wobei vorzugsweise Abstandshalter zwischen den Streben vorgesehen werden können, die die Streben miteinander in vorbestimmten Abstand verbinden, wobei dadurch auch der nötige axiale Druck auf die jeweiligen Stapel von Filterelementen ausgeübt wird, um diese unter Einschluß der Abstandselemente und ggf. gesonderter Dichtungen ausreichend druckdicht zu machen.

Gleichwohl ist die vorgenannte Konstruktion der Halterung und Druckdichtenverbindung der Filterelemente bzw. der Stapel aus Filterelementen eine sehr einfache aber dennoch sehr effektive Art der Aufnahme und Befestigung, die sich schon bei in situ-Einsätzen unter realen Einsatzbedingungen in Abwasserklärbecken und in fließenden Gewässern bewährt hat.

Die Erfindung wird nun unter Bezugnahme auf die nachfolgenden schematischen Zeichnungen anhand eines Ausführungsbeispieles eingehend beschrieben. Darin zeigen:
- Fig. 1: in der Ansicht von vorn in teilweise gebrochener Darstellung eine Vorrichtung, bestehend aus vier Stapeln von Filterelementen,
- Fig. 2: eine Seitenansicht der Darstellung von Fig. 1
- Fig. 3: ein Ablaufbolzen, von dem zwei bei der in Fig. 1 dargestellten Ausgestaltung der Vorrichtung pro Filterelementstapel verwendet werden, im Schnitt,
- Fig. 4: eine Seitenansicht des Ablaufbolzens gem. Fig. 3 um 90 ° gedreht und teilweise im Schnitt,
- Fig. 5: einen Schnitt durch den Ablaufbolzen entlang der Linie A - B von Fig. 4,
- Fig. 6: eine Draufsicht auf ein in den Stapeln der Vorrichtung verwendetes Filterelement in Form eines Membrankissens,
- Fig. 7: eine Draufsicht auf ein Stabilisierungselement, das in dem Membrankissen gem. Fig. 6 zwischen den beiden äußeren begrenzenden Membranelementen angeordnet ist,
- Fig. 8: in der Seitenansicht ein Stabilisierungselement gem. Fig. 7,
- Fig. 9: ein streifenförmiges Abstandselement sowie strichpunktiert im Umriß angedeutetes ringförmiges Abstandselement in der Draufsicht und
- Fig. 10: eine Seitenansicht des in Fig. 9 dargestellten Abstandselements.

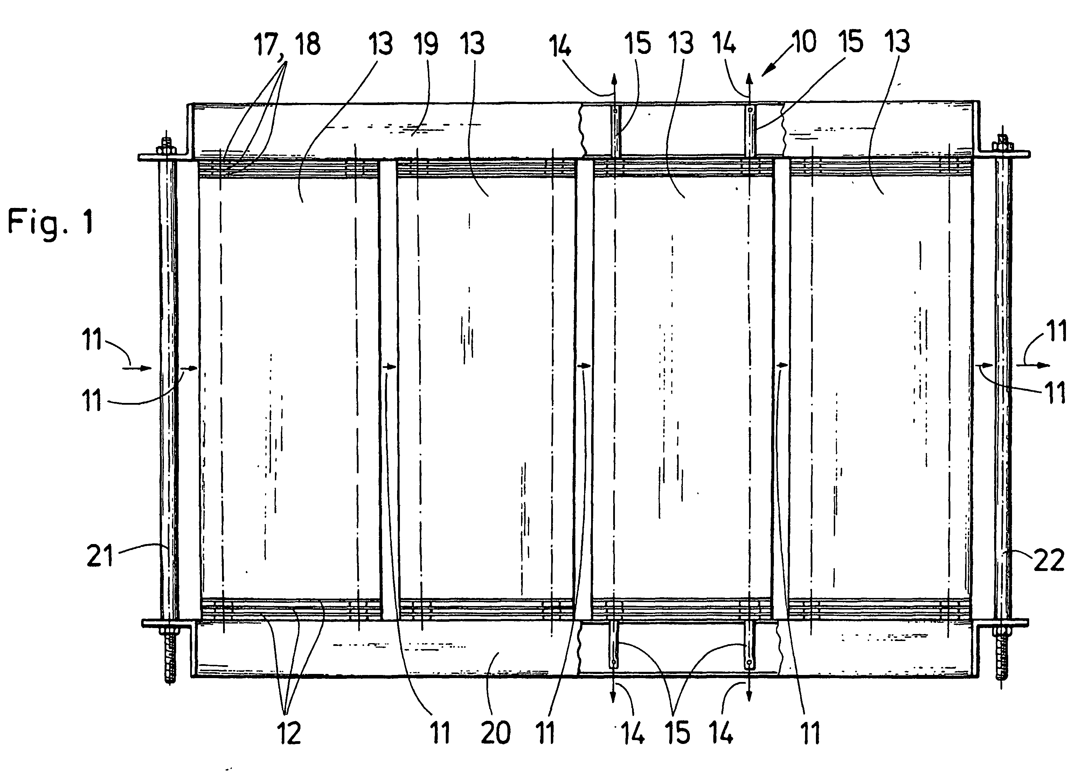

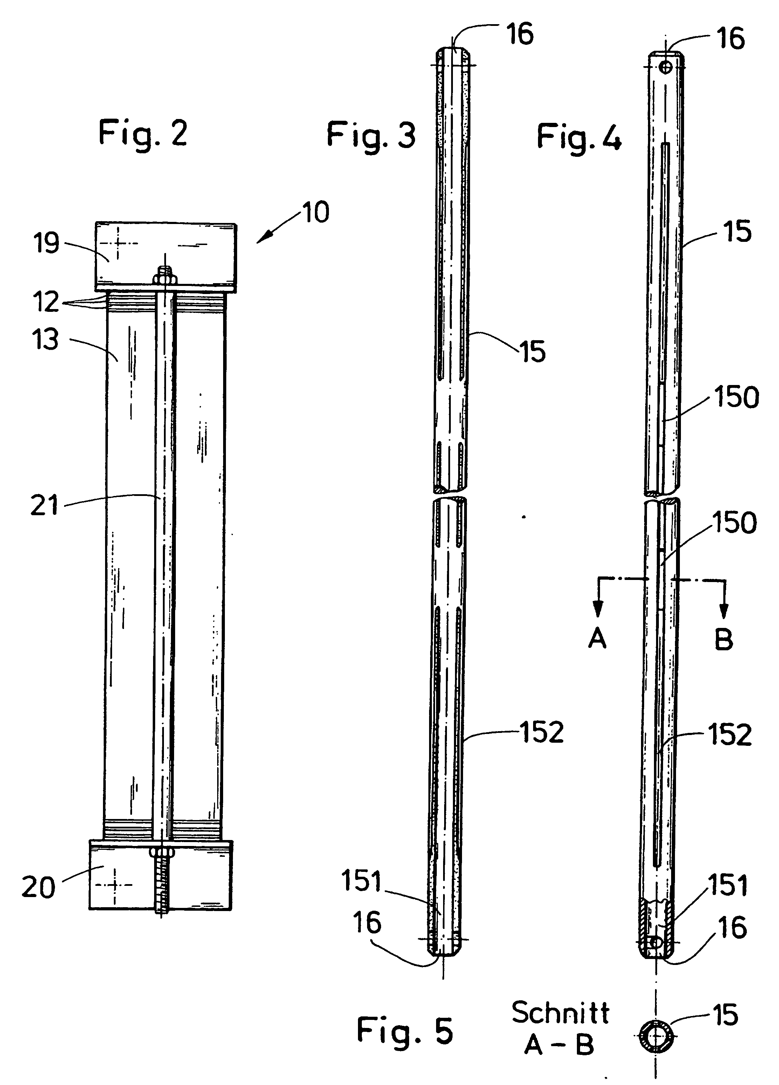

Es wird zunächst Bezug genommen auf die Darstellung von Fig. 1, die die Ansicht auf die Vorrichtung 10 von vorn darstellt, und Fig. 2, die eine Ansicht auf die Stirnseite der in Fig. 1 dargestellten Vorrichtung 10 zeigt.

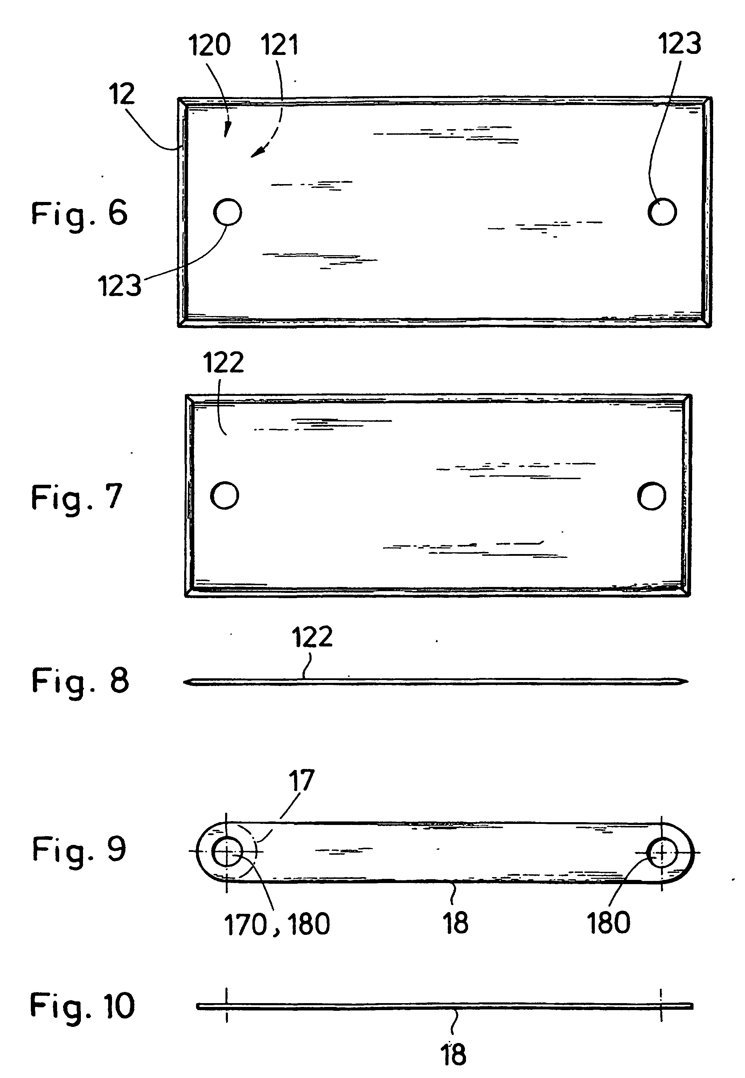

Die Vorrichtung 10 ist vorgesehen zum Filtern und Trennen von Strömungsmedien 11, insbesondere solchen Strömungsmedien 11, die eine hohe Biomassenkonzentration, beispielsweise 45 g/l, aufweisen. Die Vorrichtung 10 umfaßt im Beispiel von Fig. 1 vier Stapel 13 von Filterelementen 12, die hier beispielhaft in Form von Membrankissen, vgl. auch die Fig. 6 - 8, ausgebildet sind. Die Anzahl der Filterelemente 12 pro Stapel 13 wird bestimmt durch die bei der Vorrichtung 10 zu realisieren gewünschte Membranfläche.

Jeder Stapel 13 von Filterelementen 12 wird bei der hier in den Fig. dargestellten Ausgestaltung der Vorrichtung 10 durch jeweils zwei Ablaufbolzen 15 durchquert, wie sie insbesondere auch in den Fig. 3, 4 und 5 in gegenüber der Darstellung von Fig. 1 im vergrößertem Maßstab dargestellt sind. Es sei darauf hingewiesen, daß auch solche Ausgestaltungen von Filterelementen 12 bzw. Stapeln 13 möglich sind, die anstelle von zwei Ablaufbolzen 15 von nur einem Ablaufbolzen 15 durchquert werden. Grundsätzlich können aber auch mehr als zwei Ablaufbolzen 15 pro Stapel 13 bzw. pro Filterelement 12 vorgesehen sein, wenn beispielsweise aufgrund der niedrigen Betriebsdrücke, worauf noch weiter unten eingegangen wird, für einen möglichst ungestörten Ablauf des Permeats 14 von den Filterelementen 12 gesorgt werden soll.

Die Anzahl der Filterelemente 12, die einen Stapel 13 bilden, kann grundsätzlich auch von Stapel zu Stapel der Vorrichtung 10 variieren, wenn beispielsweise unterschiedliche Abstandselemente 17 in einem Stapel 13 gewählt werden, ober aber die einzelnen Stapel 12 unterschiedliche Anzahlen von Filterelementen 12 aufweisen. Eine Ausgestaltung, wie zuletzt erwähnt, kann beispielsweise dann sinnvoll sein, wenn das Strömungsmedium 11, im Beispiel von Fig. 1, von links nach rechts die Vorrichtung 10 durchquert, so daß die Abstände der Filterelemente untereinander von Stapel zu Stapel 13, hier im Beispiel der Darstellung von Fig. 1, von links nach rechts zunehmen. Der unterschiedliche Abstand der Filterelemente 12, der im wesentlichen durch die Abstandselemente 17 gebildet wird, worauf noch weiter unten eingegangen wird, kann beispielsweise im Bereich von 1 bis 10 nm variieren, wobei den unterschiedlichen Biomassenkonzentrationen oder sonstigen Verunreinigungskonzentrationen im Strömungsmedium 11 Rechnung getragen wird bzw. auch, um im Beispiel von Fig. 1 zu bleiben, der Zunahme der Konzentration des Strömungsmediums 11 von links nach rechts Rechnung zu tragen.

Das Strömungsmedium 11 umfließt die zu Stapeln 13 zusammengefaßten Filterelemente 12. Wenn die Filterelemente 12 in Form von Membrankissen ausgebildet sind, wird die Trennwirksamkeit der Membrankissen, da sie auf ihren beiden trennaktiveren Membranelementseiten vom Strömungsmedium 11 beaufschlagt werden können, gegenüber Filterelementen 12 mit nur einem Membranelement 120, im wesentlichen verdoppelt sein. Die Stapel 13 können, wie in Fig. 1 und 2 dargestellt ist, nebeneinander angeordnet sein, so daß das Strömungsmedium 11 die Filterelemente 12 flächig überstreichen bzw. überfließen kann. Es ist aber auch möglich, hinter- und/oder nebeneinander angeordnete Stapel 13 vorzusehen. Die Vorrichtung 10 gestattet also eine reihen- und/oder spaltenweise Anordnung der Stapel 13 mit den Filterelementen 12. Die Vorrichtung 10 kann also aufgrund ihres modular möglichen Aufbaus unmittelbar an die Art des Strömungsmediums bzw. den Konzentrationsgrad mit Verunreinigungen im Strömungsmedium angepaßt werden.

Die Stapel 13 von Filterelementen 12 werden beidseitig von Streben 19, 20, die T- bzw. L-förmig ausgebildet sein können, begrenzt. Der lichte Abstand beider Streben 19, 20 kann über Abstandshalter 21, 22, die beidseitig Gewindeansätze aufweisen können, miteinander verbunden werden. Die Länge der Abstandshalter 21, 22 wird gem. der Anzahl der Filterelemente 12 pro Stapel 13 sowie der zwischen den Filterelementen vorgesehenen Abstandselemente 17 und der Dicke der Filterelemente 12 bestimmt.

Der in den Fig. 3 - 5 in verschiedenen Ansichten dargestellte Ablaufbolzen 15, in dem das von den Filterelementen 12 kommende Permeat 14 gesammelt und nach außen abgeführt wird, vgl. auch Fig. 1, ist auf solche Filterelemente 12 abgestimmt, die in Form von Membrankissen ausgebildet sind, wie sie in den Fig. 6 - 8 dargestellt sind. Ein Permeatbolzen 15 besteht im wesentlichen aus einem Rohr, das als rohrförmiges Halbzeug zur Verfügung steht. Über den Umfang verteilt, im vorliegenden Falle an vier über den Umfang verteilten Stellen, vgl. auch Fig. 5, sind Ablaufrinnen 152 angeordnet, die die Wandung des Ablaufbolzens 15 nicht durchbrechen. Lediglich in einer vorbestimmten Anzahl über die Länge und den Umfang verteilt sind im Ablaufbolzen 15 Durchbrüche 150 angeordnet, über die das Permeat 14 in die Ablaufbohrung 151 des Ablaufbolzens 15 gelangen kann, die den Ablaufbolzen 15 axial durchquert. Die Anzahl der Durchbrüche 150 und die Anzahl der Ablaufrinnen 152 pro Ablaufbolzen 15 kann in Abhängigkeit von der Länge des Ablaufbolzens 15, von seinem Durchmesser und auch in Abhängigkeit vom Permeat 14 geeignet gewählt werden.

Der Aufbau der in Form von Membrankissen ausgebildeten Filterelemente 12 ist der Fachwelt bekannt, so daß auf die EP-B-0 129 663 verwiesen werden kann, in der der typische Aufbau eines als Membrankissen ausgebildeten Filterelements 12 beschrieben ist. Die Besonderheit bei den hier in der Vorrichtung 10 verwendeten Membrankissen liegt darin, daß zwischen den diese jeweils begrenzenden äußeren Membranelementen 120, 121 jeweils wenigstens ein flächiges, formstabiles Stabilisierungselement 122 vorgesehen ist, vgl. die Fig. 7 und 8. Mit dem formstabilen Stabilisierungselement 122 kann eine hohe Eigenstabilität des Membrankissens geschaffen werden, so daß dieses sicherstellt, daß sich die Membrankissen während des Betriebes der Vorrichtung 10 nicht berühren. Das Stabilisierungselement 122 kann auch Kunststoff und/oder einem metallischen Werkstoff und/oder einem keramischen Werkstoff bestehen und kann homogen oder auch porös ausgebildet sein, wobei im letzteren Fall ein ungestörteres Abfließen des Permeats 14 möglich ist.

Die Filterelemente 12 sind durch ringförmig und/oder streifenförmig ausgebildete Abstandselemente 17, 18, vgl. die Fig. 9 und 10, gebildet. Die Abstandselemente 17, 18 weisen Löcher 170, 180 auf, wobei die Löcher 180 derart voneinander beabstandet sind, daß sie dem Abstand der Löcher des als Membrankissen ausgebildeten Filterelements 12, die dort die Permeatabflußlöcher 123 bilden, entsprechen. Die Abstandselemente 17, 18 können, wenn sie beispielsweise aus elastomerem Werkstoff bestehen, gleichzeitig Dichtfunktion haben, so daß das durch das Filterelement 12, hier in Form von Membrankissen ausgebildet, erzeugte Permeat 14 im inneren der Membranelemente 120, 121 zu den Permeatabflußlöchern 123 fließen kann und von dort in die Ablaufrinnen 152 des die Permeatabflußlöcher 123 sowie die Abstandselemente 17, 18 durchquerenden Ablaufbolzens 15. Von den Ablaufrinnen 152 gelangt das Permeat 14 durch die Durchbrüche 150 im Ablaufbolzen 15 in die Ablaufbolzenbohrung 151 und wird nach außen abgeführt.

Während des Betriebes der Vorrichtung 10, die beispielsweise in ein Klärbecken, ein freies Gewässer oder auch einen Bioreaktor getaucht werden kann, umströmt nach dem Einführen bzw. Eintauchen in das Strömungsmedium 11 dieses alle Filterelemente 12. An die Permeatabläufe 16 der Ablaufbolzen 15 werden geeignete Leitungsverbindungen gelegt, so daß über eine daran angeschlossene Vakuumpumpe, die beispielsweise gegenüber dem Umgebungs- bzw. Atmosphärendruck, auf dem sich das Strömungsmedium 11 befindet, einen Unterdruck erzeugt, beispielsweise im Bereich zwischen 0,5 - 0,9 bar. Durch den Unterdruck wird die Trennung des Strömungsmediums 11 im Filterelement 12 bewirkt, so daß Permeat 14 erzeugt wird, das über das Filterelement 12 bzw. im Innenraum des als Membrankissen ausgebildeten Filterelements 12 zu den Ablaufrinnen 152 des Ablaufbolzens 15 gefördert wird und von dort über die Durchbrüche 150 in die Ablaufbohrung 15 strömt und von dort nach außen abgeführt wird. Es ist für den bestimmungsgemäßen Betrieb der Vorrichtung 10 lediglich nötig, eine Vakuumpumpe zur Erzeugung eines geringen Unterdrucks auf der Permeatseite des Filterelements 12 bzw. des Membrankissens vorzusehen.

Versuche mit der Vorrichtung 10 haben gezeigt, daß es sich nicht unter allen Umständen ausschließen läßt, daß sich während des Betriebs der Vorrichtung 10 auf den Filterelementen 12 Beläge aus den im Strömungsmedium enthaltenen Verunreinigungen bilden. Die erfindungsgemäß verwendete Trennung der Strömungsmedien 11 durch Erzeugung eines permeatseitigen geringen Unterdrucks gegenüber dem im wesentlichen auf dem Niveau des Umgebungs- bzw. Atmosphärendrucks befindlichen Strömungsmediums 11 hat gezeigt, daß die sich auf dem Filterelement 12 bildenden Beläge eine andere mechanische Konsistenz zeigen als beispielsweise Beläge auf Filterelementen, die in Vorrichtungen betrieben werden, die mit einem hohen Druck bzw. einer hohen Strömungsgeschwindigkeit des Strömungsmediums betrieben werden (hoher Feeddruck, hohe Feedgeschwindigkeit). Der Vorteil der erfindungsgemäßen Vorrichtung 10 zeigt sich somit auch noch in einem weiteren Bereich, daß nämlich die auf den Filterelementen 12 sich ggf. bildenden Beläge sehr leicht entfernbar sind, beispielsweise dadurch, daß von der Permeatseite der Filterelemente 12 beispielsweise mit Reinwasser eine Rückspülung veranlaßt wird, so daß die nur gering haftenden, porösen Beläge sich vom Filterelement 12 lösen und vom Strömungsmedium 11 aufgenommen werden.

Der Betrieb der erfindungsgemäßen Vorrichtung 10 kann noch dadurch verbessert werden, daß ggf. das Strömungsmedium mit Luft verwirbelt wird und ggf. auch eine Umwälzpumpe vorgesehen wird, um das Strömungsmedium über die Flächen der Filterelemente 12, d.h. die Flächen der Membranelemente 120, 121, mit geringfügiger Geschwindigkeit streichen zu lassen. Auch dadurch kann schon mit geringem Energieaufwand einem sich ausbildenden Belag auf dem Filterelement 12 entgegengewirkt werden.

### Bezugszeichenliste

- 10: Vorrichtung
- 11: Strömungsmedium
- 12: Filterelement, Membrankissen
- 120: Membranelement
- 121: Membranelement
- 122: Stabilisierungselement
- 123: Permeatabflußloch
- 13: Stapel
- 14: Permeat
- 15: Ablaufbolzen
- 150: Durchbruch
- 151: Ablaufbohrung
- 152: Ablaufrinne
- 16: Permeatablauf
- 17: Abstandselement (ringförmig)
- 170: Loch
- 18: Abstandselement (streifenförmig)
- 180: Loch
- 19: Strebe
- 20: Strebe
- 21: Abstandshalter
- 22: Abstandshalter

## Patentansprüche

1. In einen Klärbehälter, ein freies Gewässer oder einen Bioreaktor eintauchbare Vorrichtung (10) zum Filtern und Trennen von insbesondere biologisch organischen Strömungsmedien (11) durch Umkehrosmose, Mikro-, Ultra- oder Nanofiltration, umfassend eine Mehrzahl voneinander beabstandeter flächiger Filterelemente, die vom Strömungsmedium (11) umflossen werden, derart, daß eine Mehrzahl von gesonderten Stapeln (13) von Filterelementen (12) hinter- und/oder nebeneinander angeordnet ist, wobei die Stapel (13) hinter- und/oder nebeneinander vom Strömungsmedium (11) umflossen werden und wobei das von den Filterelementen (12) gesammelte Permeat (14) in die Stapel (13) von Filterelementen (12) durchquerende Ablaufbolzen (15) eingeführt und über Permeatabläufe (16) abgeführt wird, und daß das Permeat (14) im wesentlichen durch Aufbau eines Unterdrucks durch eine Vakuumpumpe am Permeatablauf (16) gegenüber dem im wesentlichen auf dem Niveau des Umgebungs- bzw. Atmosphärendrucks befindlichen Strömungsmedium (11) erzeugbar ist.

2. Vorrichtung nach Anspruch 1, **dadurch gekennzeichnet, daß** der permeatseitige Unterdruck im Bereich von 0,4 bis 0,9 bar liegt.

3. Vorrichtung nach einem oder beiden der Ansprüche 1 oder 2, **dadurch gekennzeichnet, daß** die Filterelemente (12) nach Art von Membrankissen ausgebildet sind.

4. Vorrichtung nach Anspruch 3, **dadurch gekennzeichnet, daß** in den Membrankissen zwischen den diese jeweils begrenzenden äußeren Membranelementen (120, 121) jeweils wenigsten ein flächiges, formstabiles Stabilisierungselement (122) zur Schaffung einer hohen Eigenstabilität des Membrankissens angeordnet ist.

5. Vorrichtung nach einem oder mehreren der Ansprüche 1 bis 4, **dadurch gekennzeichnet, daß** die Filterelemente (12) aus einem Polymer oder Polymergemisch bestehen.

6. Vorrichtung nach einem oder mehreren der Ansprüche 1 bis 4, **dadurch gekennzeichnet, daß** die Filterelemente (12) aus einem Keramikwerkstoff bestehen.

7. Vorrichtung nach einem oder mehreren der Ansprüche 4 bis 6, **dadurch gekennzeichnet, daß** das Stabilisierungselement (122) aus porösem Werkstoff besteht.

8. Vorrichtung nach einem oder mehreren der Ansprüche 4 bis 7, **dadurch gekennzeichnet, daß** das Stabilisierungselement (122) aus Kunststoff und/oder einem metallischen Werkstoff und/oder einem keramischen Werkstoff besteht.

9. Vorrichtung nach einem oder mehreren der Ansprüche 1 bis 8, **dadurch gekennzeichnet, daß** der Ablaufbolzen (15) eine Mehrzahl von um einen Umfang herum und über seine Länge verteilt angeordnete Durchbrüche (150) zum Eintritt des Permeats (14) in eine den Ablaufbolzen (15) im wesentlichen axial durchquerende Ablaufbohrung (151) aufweist.

10. Vorrichtung nach einem oder mehreren der Ansprüche 1 bis 9, **dadurch gekennzeichnet, daß** die Filterelemente (12) des Stapels (13) untereinander derart voneinander beabstandet sind, daß sich die Filterelemente (12) während des Betriebes nicht berühren.

11. Vorrichtung nach Anspruch 10, **dadurch gekennzeichnet, daß** zur Beabstandung der Filterelemente (12) untereinander ringförmige Abstandselemente (17) vorgesehen sind.

12. Vorrichtung nach Anspruch 10, **dadurch gekennzeichnet, daß** zur Beabstandung der Filterelemente (12) untereinander streifenförmige Abstandselemente (17) vorgesehen sind.

13. Vorrichtung nach einem oder beiden der Ansprüche 11 oder 12, **dadurch gekennzeichnet, daß** die Abstandselemente (17, 18) dichtende Wirkung gegenüber einem Permeatabflußraum haben.

14. Vorrichtung nach einem oder mehreren der Ansprüche 1 bis 13, **dadurch gekennzeichnet, daß** die Stapel (13) von Filterelementen (12) von beidseitig die Stapel (13) begrenzenden Streben (19, 20) zusammengehalten werden.

15. Vorrichtung nach Anspruch 14, **dadurch gekennzeichnet, daß** die Streben (19, 20) durch Abstandshalter (21, 22) miteinander verbindbar sind.

## Claims

1. Device (10) which may be submersed in a filtration tank, an open body of water or a bio-reactor for filtering and separating biologically organic fluids (11) by reverse osmosis, micro-, ultra-, or nano-filtration, comprising a plurality of mutually spaced, flat filter elements around which the fluid (11) flows, the plurality of separate stacks (13) of filter elements (12) being disposed one behind the other or side by side so that the fluid (11) flows around the stacks (13) disposed one behind the other and/or side by side, and the permeate (14) collected by the filter elements (12) is introduced into drainage bolts (15) extending through the stacks (13) of filter elements (12) and fed away by means of permeate outlets (16), and the permeate (14) can essentially be generated by creating a pressure by means of a vacuum pump at the permeate outlet (16) which is essentially lower than the level of the ambient or atmospheric pressure of the fluid (11).

2. Device as claimed in claim 1, **characterised in that** the negative pressure on the permeate side is in the range of from 0.4 to 0.9 bar.

3. Device as claimed in one of both of claims 1 or 2, **characterised in that** the filter elements (12) are provided in the form of membrane cushions.

4. Device as claimed in claim 3, **characterised in that** at least one flat, dimensionally stable stabiliser element (122) is respectively provided in the membrane cushion between the outer membrane elements (120, 121) bounding it in order to impart a high intrinsic strength to the membrane cushion.

5. Device as claimed in one or more of claims 1 to 4, **characterised in that** the filter elements (12) are made from a polymer or a polymer mixture.

6. Device as claimed in one or more of claims 1 to 4, **characterised in that** the filter elements (12) are made from a ceramic material.

7. Device as claimed in one or more of claims 4 to 6, **characterised in that** the stabiliser element (122) is made from porous material.

8. Device as claimed in one or more of claims 4 to 7, **characterised in that** the stabiliser element (122) is made from plastic and/or a metal material and/or a ceramic material.

9. Device as claimed in one or more of claims 1 to 8, **characterised in that** the drainage bolt (15) has a plurality of orifices (150) distributed around a circumference and across its length to allow the permeate (14) to enter a drainage bore (151) extending essentially axially through the drainage bolt (15).

10. Device as claimed in one or more of claims 1 to 9, **characterised in that** the filter elements (12) of the stack (13) are spaced apart from one another so that the filter elements (12) do not make contact during operation.

11. Device as claimed in claim 10, **characterised in that** annular spacer elements (17) are provided as a means of spacing the filter elements (12) apart from one another.

12. Device as claimed in claim 10, **characterised in that** strip-shaped spacer elements (18) are provided as a means of spacing the filter elements (12) apart from one another.

13. Device as claimed in one or both of claims 11 or 12, **characterised in that** the spacer elements (17, 18) fulfil a sealing function with respect to a permeate outlet chamber.

14. Device ads claimed in one or more of claims 1 to 13, **characterised in that** the stacks (13) of filter elements (12) are held together by struts (19, 20) bounding the stacks (13) at both ends.

15. Device as claimed in claim 14, **characterised in that** the struts (19, 20) can be connected to one another by spacer rods (21, 22).

## Revendications

1. Dispositif (10) destiné à filtrer et à séparer des fluides (11) particulièrement biologiques-organiques par osmose inverse, microfiltration, ultrafiltration ou nanofiltration, pouvant être immergé dans un bassin filtrant, des eaux libres ou un bioréacteur, comportant une pluralité d'éléments filtrants plats disposés à distance les uns des autres, qui seront baignés par le fluide (11), de telle sorte qu'une pluralité de piles (13) séparées d'éléments filtrants (12) est disposée en série et/ou en parallèle, les piles (13) étant baignées en série ou en parallèle par le fluide (11) et le perméat (14) collecté par les éléments filtrants (12) étant introduit dans des axes d'écoulement (15) traversant les piles d'éléments filtrants (12) et étant emmené par des évacuations de perméat (16), et en ce que le perméat (14) peut être généré sensiblement en établissant une dépression par une pompe à vide sur l'écoulement de perméat (16) par rapport au fluide (11) situé sensiblement au niveau de la pression ambiante ou atmosphérique.

2. Dispositif selon la revendication 1, **caractérisé en ce que** la dépression côté perméat se situe dans la plage de 0,4 à 0,9 bar.

3. Dispositif selon l'une des revendications 1 ou 2 ou ces deux revendications, **caractérisé en ce que** les éléments filtrants (12) sont conçus à la manière de coussins à membranes.

4. Dispositif selon la revendication 3, **caractérisé en ce que** respectivement au moins un élément de stabilisation (122) plat et indéformable, destiné à créer une stabilité intrinsèque élevée du coussin à membranes, est disposé dans les coussins à membranes entre les éléments de membrane (120, 121) extérieurs limitant chacun de ceux-ci.

5. Dispositif selon l'une ou plusieurs des revendications 1 à 4, **caractérisé en ce que** les éléments filtrants (12) sont constitués d'un polymère ou d'un mélange de polymères.

6. Dispositif selon l'une ou plusieurs des revendications 1 à 4, **caractérisé en ce que** les éléments filtrants (12) sont constitués d'un matériau en céramique.

7. Dispositif selon l'une ou plusieurs des revendications 4 à 6, **caractérisé en ce que** l'élément de stabilisation (122) est constitué d'un matériau poreux.

8. Dispositif selon l'une ou plusieurs dès revendications 4 à 7, **caractérisé en ce que** l'élément de stabilisation (122) est constitué de matière plastique et/ou d'un matériau métallique et/ou d'un matériau céramique.

9. Dispositif selon l'une ou plusieurs des revendications 1 à 8, **caractérisé en ce que** l'axe d'écoulement (15) comprend une pluralité de passages (150) disposés en étant répartis autour d'une périphérie et sur sa longueur, destinés à faire pénétrer le perméat (14) dans un alésage d'écoulement (151) traversant sensiblement axialement l'axe d'écoulement (15).

10. Dispositif selon l'une ou plusieurs des revendications 1 à 9, **caractérisé en ce que** les éléments filtrants (12) de la pile (13) sont mutuellement écartés les uns des autres, de telle sorte que les éléments filtrants (12) n'entrent pas en contact pendant le fonctionnement.

11. Dispositif selon la revendication 10, **caractérisé en ce que** des éléments d'écartement annulaires (17) sont prévus pour écarter les éléments filtrants (12) les uns des autres.

12. Dispositif selon la revendication 10, **caractérisé en ce que** des éléments d'écartement (18) en forme de bande sont prévus pour écarter les éléments filtrants (12) les uns des autres.

13. Dispositif selon l'une des revendications 11 ou 12 ou ces deux revendications, **caractérisé en ce que** les éléments d'écartement (17, 18) présentent un effet d'étanchéification vis-à-vis d'une chambre d'écoulement de perméat.

14. Dispositif selon l'une ou plusieurs des revendications 1 à 13, **caractérisé en ce que** les piles (13) d'éléments filtrants (12) sont maintenues ensemble par des étais (19, 20) limitant les piles (13) sur les deux côtés.

15. Dispositif selon la revendication 14, **caractérisé en ce que** les étais (19, 20) peuvent être reliés l'un à l'autre par des entretoises (21, 22).
